(19) **Europäisches Patentamt**

**European Patent Office**

**Office européen des brevets**

(11) **EP 1 061 686 B1**

(12) **EUROPEAN PATENT SPECIFICATION**

(45) Date of publication and mention
of the grant of the patent:
**11.02.2004 Bulletin 2004/07**

(51) Int Cl.⁷: **H04K 3/00**

(86) International application number:
**PCT/ES1999/000048**

(21) Application number: **99906254.0**

(22) Date of filing: **24.02.1999**

(87) International publication number:
**WO 1999/044322 (02.09.1999 Gazette 1999/35)**

(54) **CALL MASKING SYSTEM FOR MOBILE TELEPHONE**

ANRUFMASKIERUNGSSYSTEM FÜR MOBILTELEFON

SYSTEME DE MASQUAGE D'APPELS POUR TELEPHONIE MOBILE

(84) Designated Contracting States:
**DE FR GB IT PT**

(30) Priority: **26.02.1998 ES 9800473**

(43) Date of publication of application:
**20.12.2000 Bulletin 2000/51**

(73) Proprietors:
• **Pousada Carballo, José Maria
36002 Pontevedra (ES)**
• **Gonzalez Castano, Francisco Javier
36211 Vigo (ES)**
• **Isasi De Vicente, Fernando Guillermo
36204 Vigo (ES)**

(72) Inventors:
• **Pousada Carballo, José Maria
36002 Pontevedra (ES)**

• **Gonzalez Castano, Francisco Javier
36211 Vigo (ES)**
• **Isasi De Vicente, Fernando Guillermo
36204 Vigo (ES)**

(74) Representative: **Maldonado Jordan, Julia
Linares, 7 Pta. 3
46018 Valencia (ES)**

(56) References cited:
**EP-A2- 0 293 167       WO-A2-98/34412**

• **PATENT ABSTRACTS OF JAPAN; & JP
07075155 A (MATSUSHITA ELECTRIC AND CO
LTD) 17 March 1995.**
• **PATENT ABSTRACTS OF JAPAN; & JP
09121205 A (NIPPON SOGO ENJINIAARING KK)
6 May 1997.**

## Description

### Field:

Telecommunications. Mobile communications.

### State of the art:

Patent US-A-5295180 describes a system to generate zone identification signals for mobile communication systems. Terminals know zone identity by analyzing a signal emitted by a mark transmitter.

This system includes the possibility in which, in case of zone overlapping, one of the mark transmitters has a higher priority, and can interfere with the signal of the others. In other words, the system uses interfering signals to define influence areas of mark transmitters.

However, the purpose of this system is not the disabling of terminals present in a given zone, and it does not take into account propagation properties in closed spaces, in order to generate interfering signals. Because of these reasons, it cannot be used to disable calls in closed spaces, neither in an indiscriminate nor in a selective way.

In the military, and for electronic war applications, there are devices that detect and jam enemy systems, such as radar or communications.

Also in the military context. there are indiscriminate interference generators to disable devices that activate bombs remotely.

### Description of the invention:

The disabler for mobile communications is a device to be placed in a closed area, whose functionality consists of: (a) detecting carrier signals from any mobile communications base station containing signaling channels, (b) measuring carrier level, and (c) generating noise signals to affect signaling channels. When these noise signals jam detected carriers, no mobile terminal/ telephone present in the area will be able to receive base station signaling information. As a consequence, incoming call alarms are disabled.

Therefore, the main advantage of this system is that mobile terminal activity is disabled, independently of the state set by the user, in closed areas in which incoming call alarms are inconvenient or terminal activity may cause trouble.

Interference signals will not have an effect outside the area where the device is installed.

### Description of an implementation:

The system will be able to generate interfering signals that degrade carrier-to-noise ratio at mobile terminal input. As a consequence, mobile terminals will not receive signaling channels from base stations. In other words, the disabler generates an artificial shadow region in places where mobile terminals could operate in a normal situation.

To achieve it, the following implementation is proposed:

### BASIC SYSTEM:

The disabler will have circuitry to:

1. Detect carriers emitted by base stations, and measure their power level.
2. Identify which ones among them include signaling channels.
3. Identify the location of those channels in time. frequency and/or code.
4. Generate noise signals to mask those channels. Noise signal power level can be selected.

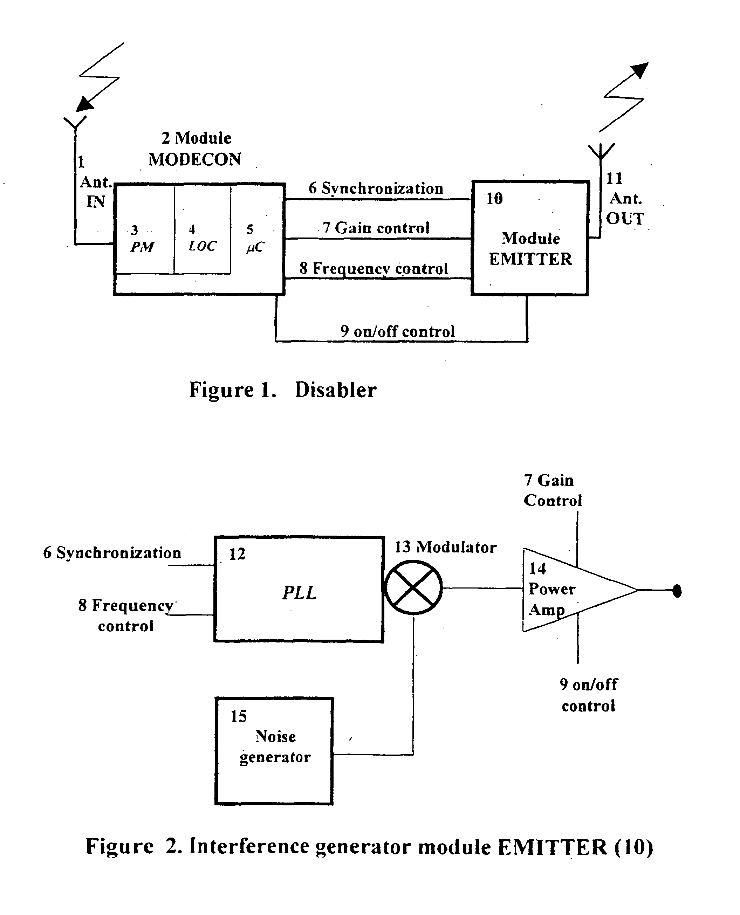

Figure 1 shows a complete block diagram of the system, which is basically composed of a detection & control module, MODECON (**2**), an interference generator module EMITTER (**10 and figure 2**) and two antennas (**1, 11**).

Module MODECON (**2**) will be mainly composed of:

a) A control unit μ***C*** (**5**), that controls the whole system.
b) Subsystem ***PM*** (**3**), to measure power level of carriers arriving from neighbor base stations.
c) Subsystem ***LOC*** (**4**), to locate signaling channels within the carriers.

The interference generator EMITTER (**10**) will generate interference signals to affect carrier signaling channels. For each interference signal, an interference generator EMITTER (**10**) is necessary. EMITTER (**10**) is composed of:

a) A noise generator (**15**), to generate a base band noise signal. Possible implementations are a polynomial pseudo-random generator or a triangular wave generator.
b) A frequency generator ***PLL*** (**12**) controlled by MODECON (**2**), by means of a frequency control signal (**8**) and a synchronization signal (**6**).
c) A frequency modulator (**13**).
d) A power amplifier (**14**), also controlled by module MODECON (**2**): (a) **in gain** (**7**), to set interference signal power level, so that the carrier-to-interference ratio does not allow terminal operation (typically 0dB). (b) **On/off** (**9**), to stop interference generation while ***PM*** (**3**) performs level measurement tor carriers containing signaling channels. Measurement will be updated periodically (one second measurement intervals per hour should be sufficient).

Two antennas complete the disabler:

    a) *IN* (**1**) antenna, to receive base station carriers.
    b) *OUT* (**11**) antenna, to emit interference signals.

As an additional safeguard, directive antennas will be used to restrict system influence inside the target area.

## ADVANCED SYSTEM:

The basic system is suitable for areas that receive carriers from a single base station. In this case. one of those carriers contains signaling channels, and, therefore, a single interference generator module EMITTER (**10**) is necessary.

In places that receive carriers from different base stations, the system will have a single MODECON (**2**) module, and as many interference generator modules EMITTER (**10**) as required.

## SIGNAL-TO-NOISE SPECIFICATION:

It is necessary to ensure that the disabler will not affect mobile terminals located outside the target area. The interference level emitted by the system is related to carrier level as received inside the target area, in a way such that terminals are disabled. We must guarantee that the system will not interfere with mobile terminals located outside the target area. To achieve this, the carrier-to-interference ratio at the input of an external mobile terminal, $K_r$, should be typically 20dB higher than the same ratio for a terminal inside the closed area.

    1- Let us suppose that in a given moment there are *n* active carriers with signaling channels in the neighborhood of the disabler.
    2- Let us suppose that traffic channels and signaling channels are organized in a series of multiplex, which modulate each of the *n* active carriers.
    3- The resulting bandwidth of modulated carrier *i* is $B_i$, *i=1..n.*
    4- We define $P_i$ as a power level related to modulated carrier *i, i = 1...n,* measured outside the target area.
    5- Let us consider the *i*-th interference generator module EMITTER (**10**): We define $c_g{}^i$ as the gain control (**7**) of its power amplifier (**14**), selected by $\mu C$ (**5**), and $N_i (c_g{}^i)$ as the level of the interference signal measured at the output of module EMITTER (**10**), in bandwidth $B_i$, during signaling time slot. $N'_i$ is the power level produced by EMITTER (**10**) outside the target area.
    6- Let *L* be losses due to target area walls (typically higher than 10dB), and let *O* be interference signal attenuation outside the target area due to the directivity of antenna *OUT* (**11**).

It must hold that:

$$K_r = P_i - N'_i.$$

Since

$$N_i = P_i - L$$

and

$$N'_i = N_i - L - O,$$

then:

$$K_r = P_i - N'_i = P_i - (N_i - L - O) = P_i - (P_i - L - L - O)$$

and, as a consequence,

$$K_r = 2{*}L + O$$

Since *O > 0dB* y $L \geq \textbf{10dB}$, it is guaranteed that a mobile terminal located outside the target area should work normally, because $K_r \geq \textbf{20dB.}$

## Claims

**1.** A mobile terminal disabler for jamming mobile communication channels of base stations in closed areas, comprising:

- A carrier level measurement system (3) for measuring power level of carriers arriving from neighbour base stations.
- A receiving antenna (1) for receiving mobile communications carriers.
- An emitting antenna (11) for transmitting interference signals.
- An analyser (4) for detecting signalling channels, e.g. GSM BCCH, SACH, PCH etc, contained in the carriers (3), and for generating a synchronisation signal related to those channels (6).
- A frequency generator (12) controlled by means of a frequency control signal (8) and a synchronization signal (6), for generating a frequency signal.
- A noise generator (15) for generating a base band noise signal
- A modulator (13) for modulating the frequency signal at the output of the frequency generator (12).
- A control unit (5) for determining when the system is in carrier level measurement and signalling channel detection stage, or when the interference signals are emitted, in the first case disabling interference generation (9), and in the second case indicating when interference is emitted (6), setting interference level (7) and setting interference frequency (8).

2. The system described in claim 1, comprising:

- An analyser (4) for detecting a specific signalling channel contained in the carriers (3), to permit to disable only specific actions related to that channel, e.g. disabling incoming calls but allowing mobile terminals to generate outgoing calls.

**Patentansprüche**

1. Ein mobiler Datenendstationsabschalter zur Störung mobiler Fernmeldesignalkanäle von Basisstationen in geschlossenen Bereichen, bestehend aus:

- Einem Trägerpegelmesssystem (3) zur Messung des Leistungspegels, der von Trägem benachbarter Basisstationen aus kommt.
- Einer Empfangsantenne (1) fiir den Empfang mobiler Fernmeldesignalträger.
- Einer Sendeantenne (11) zur Übertragung von Störsignalen.
- Einem Analysator (4) zur Erkennung von in den Trägern (3) enthaltenen Signalisierungskanälen wie z.B. GSM, BCCH, SACH, PCH etc. und zur Erzeugung eines zu diesen Kanälen bezüglichen Synchronisierungszeichens (6).
- Einem durch ein Frequenzsteuerungssignal (8) und ein Synchronisierungssignal (6) gesteuerten Frequenzgenerator (12) zur Erzeugung eines Frequenzsignals.
- Einem Rauschgenerator (15) zur Erzeugung eines Rauschsignals auf dem Basisband.
- Einem Modulator (13) zur Modulation des Frequenzsignals am Ausgang des Frequenzgenerators (12).
- Einer Regeleinrichtung (5) zur Feststellung, wenn das System auf Trägerpegelmessung und Signalisierungskanalerkennung steht oder wenn die Störsignale ausgestrahlt werden, wobei im ersten Fall die Störungserzeugung (9) unwirksam gemacht wird und im zweiten Fall angegeben wird, wenn eine Störung ausgestrahlt wird (6), wobei der Störpegel (7) und die Störfrequenz (8) festgestellt werden.

2. Das in Patentanspruch 1 beschriebene System, bestehend aus:

- Einem Analysator (4) zur Erkennung eines in den Trägem (3) enthaltenen spezifischen Signalisierungskanals, um die Deaktivierung von nur diesen Kanälen bezüglicher spezifischer Vorgänge zu gestatten, z.B. durch Deaktivierung eingehender Anrufe, jedoch Zulassung der Erzeugung ausgehender Anrufe.

**Revendications**

1. Un déconnecteur de terminal mobile pour brouiller les voies de communication mobile des stations de base dans les espaces fermés, qui comprend:

- Un dispositif pour mesurer l'amplitude de l'onde porteuse (3) afin de mesurer le niveau de puissance des ondes porteuses qui viennent des stations de base situées à proximité.
- Une antenne de réception (1) pour recevoir les ondes porteuses des communications mobiles.
- Une antenne d'émission (11) pour transmettre des signaux de brouillage.
- Un analyseur (4) pour détecter les canaux de signalisation, par ex. GSM, BCCH, SACH, PCH, etc. contenus dans les ondes porteuses (3), et pour produire un signal de synchronisation lié à ces canaux (6).
- Un générateur de fréquence (12) commandé par le biais d'un signal de commande de fréquence (8) et un signal de synchronisation (6) pour produire un signal de fréquence.
- Un générateur de parasites (15) pour produire un signal de bruit de la bande de base.
- Un modulateur (13) pour moduler le signal de fréquence à la sortie du générateur de fréquence (12).
- Un coffret de commande (5) pour voir quand le système mesure l'amplitude de l'onde porteuse et détecte le canal de signalisation, ou quand les signaux de brouillage sont émis. Dans le premier cas, il déconnecte le brouillage (9) et, dans le deuxième cas, il indique quand le brouillage est émis (6), règle le niveau de brouillage (7) et la fréquence de brouillage (8).

2. Le système décrit à la revendication n° 1, qui comprend :

- Un analyseur (4) pour détecter un canal de signalisation spécifique contenu dans les ondes porteuses (3) afin de déconnecter uniquement les actions spécifiques liées à ce canal, par ex. en refusant les appels entrants mais en autorisant les terminaux mobiles à réaliser des appels sortants.

**Figure 1. Disabler**

**Figure 2. Interference generator module EMITTER (10)**